Europäisches Patentamt

European Patent Office

Office européen des brevets

(11) Publication number: **0 378 414**
**A2**

## EUROPEAN PATENT APPLICATION

(21) Application number: **90300326.7**

(22) Date of filing: **11.01.90**

(51) Int. Cl.5: **C04B 41/87**

(30) Priority: **12.01.89 US 296507**

(43) Date of publication of application:
**18.07.90 Bulletin 90/29**

(84) Designated Contracting States:
**AT BE CH DE ES FR GB IT LI NL SE**

(71) Applicant: **ALCAN INTERNATIONAL LIMITED**
**1188 Sherbrooke Street West**
**Montreal Quebec H3A 3G2(CA)**

(72) Inventor: **Sang, Jean Victor**
**4404 Bath Road**
**Kinston, Ontario K7N 1A2(CA)**
Inventor: **Fulton, Kathleen**
**95 York Street**
**Kingston,Ontario K7K 1P9(CA)**

(74) Representative: **Wilkinson, Stephen John et al**
**c/o Stevens, Hewlett & Perkins 5 Quality**
**Court Chancery Lane**
**London WC2A 1HZ(GB)**

(54) **Process for coating particles with metal compounds.**

(57) Process for coating discrete particles (preferably ceramic particles) with metal compounds, namely metal oxides and metal nitrides. The process comprises forming a solution of an organometallic compound in a substantially anhydrous solvent that is substantially immiscible with water at ambient temperature, coating the particles with the solution and maintaining the particles substantially separate from each other while removing the solvent from the coating solution, e.g. by atomizing a slurry of the particles and the solution into a volume of heated gas. The resulting particles coated with the organometallic compound are then heated to a temperature at which the organometallic compound is converted to the corresponding metal oxide. If the final coating is to consist of a metal nitride, a carbon precursor (e.g. petroleum pitch) is also dissolved in the anhydrous solvent before the particles are coated, and then the oxide formed in the heating step is converted to the nitride by further heating at high temperature in the presence of nitrogen or a nitrogen precursor. The process is capable of producing ceramic particles coated with a uniform, continuous, non-porous layer of metal oxide or nitride suitable for use, for example, as reinforcements for ceramic or metallic composite materials.

## PROCESS FOR COATING PARTICLES WITH METAL COMPOUNDS

This invention relates to a process for providing discrete solid particles with coatings of metal compounds. More especially, the invention relates to a process for providing particles suitable for reinforcing media with coatings of metal oxides or metal nitrides.

There is growing interest nowadays in composite materials, e.g. ceramics or metals containing reinforcing media, because of their various desirable physical, thermal and chemical properties. It is known to reinforce ceramic and metallic matrices with fibres, particles and whiskers of high strength, high temperature materials such as carbides in order to improve mechanical properties such as strength, fracture toughness and thermal shock resistance. However, such reinforcing media often have surface properties which make them difficult to integrate into the matrix structure, e.g. the surfaces of the materials may have poor wettability with the matrix material, or they may be subject to oxidation or attack by matrix components at elevated temperatures. Consequently, attempts have been made to provide the reinforcing media with various coatings which modify the undesirable properties and make the reinforcing materials more compatible with the matrix components and more stable.

Coating methods have been extensively developed in the case of fibers. As described by Marshall Sittig in "Carbon and Graphite Fibers", pp 211-216, carbon fibers have been coated with silica and titania by sol-gel techniques or by chemical vapor deposition and pyrolysis of organometallic compounds. Similar methods have been described by P. Bracke, H. Schurmans and J. Verhoest in "Inorganic Fibres and Composite Materials"; E.G. Kendall in "Composite Materials, Vol. IV, Metallic Matrix Composites" and by Chawla, K.K. in a review of "Composite Materials".

In fact such processes for the coating of continuous fibers are relatively simple as each fiber tow can be passed continuously through a series of process steps and then laid up or wound. For example, in sol-gel coating techniques, the fiber is passed through a colloidal suspension providing a continous coating of sol. The coated fiber is then moved through a drying zone where the sol is gelled carefully to prevent crazing of the gel due to over-rapid loss of water. Finally, the fiber is passed through a heated furnace zone in which the temperature and gas composition are determined by the purpose for which the coating has been applied. Protective coatings usually require temperatures in excess of 1000°C for the removal of micro-porosity.

In contrast, the coating of discrete particulate fillers, i.e. whiskers, particles and platelets, is far more difficult and few coating methods are available.

European Applications Patent EP 013343 in the name of Minnesota Mining and Manufacturing Company published on February 20, 1984 proposes to produce abrasion-resistant silicon carbide particles by the deposition of various nitrides, i.e., $Si_3N_4$, AlN or TiN, as coatings from gaseous inorganic reactants using chemical vapor deposition techniques in fluidized beds. Such coating methods require very high coating temperatures in excess of 1300°C. Similar methods using organometallic precursors and requiring lower reaction temperatures have been proposed by Kato, A., at the 1st International Conference on Ceramic Powder Processing, held at Orlando, Florida, 1-5 November 1987, for the coating of MgO powders with silica. However, such chemical vapor deposition routes are very slow, labor-intensive processes and are therefore expensive.

Attempts to coat particles using sol-gel techniques have been proposed. One method, described in U.S. Patent 4,291,070 issued to Brown et al on September 22, 1981 proposes to coat metallic particles with $Al_2O_3$ using alumina sols: coating is carried out by fluidizing the particles with hot air spraying the sol solution in the bed. It is claimed that the method can provide thick coatings (-50$\mu$m) which upon firing to 1000°C exhibit good adhesion with some cracks. However, such coatings are not fully protective and are used only to delay the dissolution of the metallic particles into a melt. Other sol-gel techniques described in Application Patents Jpn Kokai Tokkyo Koho, JP 60-246,254 and JP 62-138,362 propose to precipitate colloidal particles in-situ in the presence of the particles to be coated. In such methods, dispersion of the ceramic particles to be coated are mixed with a metal alkoxide which is then hydrolysed to precipitate the colloids. Similar sol-gel methods using inorganic metal salt precursors can be found in the literature. For example, fine particles of hydrated $Al_2O_3$-coated $Cr_2O_3$ composite powders have been prepared by Byung-Kwan IKim and I. Yasui (J. Cer. Soc., Jpn. Inter. Ed., Vol. 95, 1987, pp 399-405) by the hydrolysis of aluminium nitrate in the presence of urea.

Coating producing by sol-gel techniques are less expensive than those produced by chemical vapor deposition techniques. However, thin coatings produced by sol-gel techniques adhere only loosely to the substrate and the coating materials have also a tendency to deposit separately from the particles to be coated. Furthermore, such coatings generally exhibit some porosity unless calcined to high temperatures i.e., 1000°C to achieve full densification. As a result such methods are not generally suitable for producing the uniform coatings required for protecting particles from oxidation or chemical attack.

It is accordingly an object of the present invention to provide a process for coating particulate media with other protective materials.

Another object of the invention is to provide a process for coating particulate media with materials that modify the surface properties of such media.

Yet another object of the invention is to provide a process for coating particulate reinforcing media with metal compounds.

According to one aspect of the invention there is provided a process for providing discrete solid particles with a coating of a metal compound, which process comprises: coating said particles with a substantially anhydrous solution containing an organometallic compound in a solvent that is substantially immiscible with water; evaporating said solvent from said solution while maintaining said coated particles substantially separate from each other; heating said coated particles to convert said organometallic compound to a metal oxide; and optionally converting said metal oxide to a corresponding metal nitride by heating said oxide in the presence of carbon and nitrogen.

According to another aspect of the invention there is provided discrete solid particles having a coating comprising a metal compound, said particles having been prepared by a process as described above.

The invention, at least in its preferred forms, has the advantage of producing uniform, tenacious, smooth and essentially pore-free coatings on the particles.

The present invention is capable of producing coatings of metal oxides or metal nitrides, depending on the steps employed. In both cases, however, the first step is the formation of a solution of an organometallic compound used as a precursor for the metal atoms required in the final coating.

Although organometallic compounds have previously been used for forming coatings on particulate material, they have generally been employed in hydrolyzed condition by virtue of being dissolved in water or in solutions containing water. In the present invention, however, the organometallic compounds are not hydrolyzed and they are maintained in an unhydrolysed condition by being dissolved in anhydrous solvents that are substantially immiscible with water, e.g., non-polar organic solvents such as hydrocarbons like heptane and toluene, or water-immiscible polar solvents.

Solvents which do not normally contain traces of moisture, e.g., hydrocarbons, can be used without any drying steps, but solvents which do contain traces of moisture should be dried by using a suitable dessicant or by other suitable means. By employing solvents which are substantially immiscible with water, the likelihood of the solution absorbing moisture from the air or from equipment is minimized.

The organometallic compounds that can be employed in the present invention are those which can be converted to a metal oxide upon heating. This includes oxygen-containing organometallics which can be converted to metal oxides in non-oxidizing atmospheres and organometallics which can be converted to metal oxides only by oxidation in oxidizing atmospheres. The most preferred organometallic compounds are metal alkoxides of the general formula $M(OR)_n$ wherein M is a metal atom, n is a number equal to the valence of the metal, and R is an alkyl group such as n-propyl, isopropyl, n-butyl, isobutyl, t-butyl and n-amyl. Depending on the nature of the R group and the amount of intermolecular association, the alkoxides are solids or liquids at room temperature. Such compounds are preferred because they are commercially available and relatively inexpensive, they decompose at quite low temperatures (e.g. decomposition is normally complete at temperatures between 250°C and 250°C), and they provide non-hazardous decomposition products, such as alcohols and olefins, which can be treated or disposed of without difficulty. Preferred metal alkoxides include aluminium isopropoxide, aluminium secondary butoxide, magnesium isopropoxide, zirconium isopropoxide and tetraethoxy silane (TEOS).

Other organometallic compounds may also be employed, if desired, e.g., $\beta$-diketonate complexes of appropriate metals, metal carboxylates and various metal alkyls and aryls. Among the $\beta$-diketonates, the acetylacetonates have the advantage of being less reactive towards traces of moisture than the alkoxides, but they have the disadvantage of requiring higher decomposition temperatures (e.g. above 325°C). Similarly, while metal carboxylates of the formula $(RCOO)_nM$ that are soluble in hydrocarbon solvents, i.e. those having a sufficiently long R chain, may also be used, their decomposition temperatures are also high (e.g. in excess of 400°C). Metal alkyls and aryls require special handling techniques because they are generally thermally unstable, are readily decomposed by traces of moisture and have a tendency to give off toxic volatile compounds.

It is normally desirable to use organometallics which produce refractory metal oxides and nitrides since the coated particulates are often to be used as reinforcements for high temperature-resistant materials. If desired, however, organometallics which lead to non-refractory oxides and nitrides, e.g. copper and nickel oxides, may be employed.

If the final coating is to be a metal oxide, the solution of the organo-metallic compound alone is used to coat the discrete particles. However, if the final coating is to be a metal nitride, a non-aqueous carbon precursor, e.g. petroleum pitch, should preferably also be present in the solution in an amount suitable for the nitride-producing reaction described later. The carbon precursor can be introduced into the solvent either prior to, simultaneously with or after the organometallic compound. The carbon precursor should preferably be soluble in the solvent and one which decomposes to carbon at a temperature below that required for the nitride-producing reaction.

An important feature of the present invention, for the production of both oxide and nitride coatings, is that the particles are each substantially evenly coated over their entire surface area with the solution and then the coated particles are held substantially separate from each other while the solvent (or a substantial quantity thereof) is removed from the solution. The solutions can be deposited onto the particle surfaces and the particles can be kept separate by using a variety of methods and equipment, for example the methods and equipment referred to in "RECENT AD-VANCES IN MICROENCAPSULATION TECHNOL-OGY AND EQUIPMENT", pp 353-376 of DRUG DEVELOPMENT AND INDUSTRIAL PHARMACY, 14 (2 & 3), 1988, the disclosure of which is incorporated herein by reference. These methods generally have the common feature that coating is achieved by the fine atomization of the coating solution or a dispersion of the particles in the solution.

The preferred atomization technique is by spray drying, since spray dryers are commonly available (e.g. as shown on p. 359 of the DRUG DEVELOPMENT AND INDUSTRIAL PHARMACY article). In this method the particulate material is dispersed as uniformly as possible in the solution so that all the particles are contacted with the solution over their entire surface areas. Consequently, any clumps or aggregates of the material should be broken down and preferably some kind of mechanical stirring should be employed, most desirably by an ultrasonic vibrating probe.

In the case where very fine material has to be coated, it is found that complete dispersion can be better achieved by the addition of a dispersant or a wetting agent, such as the dioctyl ester of sodium sulfosuccinic acid known by the trade mark "Aerosol OT-100", to the organometallic solution. This dispersion is then atomized into a heated stream of air or an inert gas. The heated air or inert gas supplies the latent heat of vaporization required to remove the solvent from the coating material. The atomization of the dispersion substantially separates the coated particles from each other and avoids clumping of the particles as the solvent is being removed and thus ensures a uniform coating of all individual particles. Atomization involves the spraying of fine droplets of the dispersion into a relatively large volume of gas. The high surface area to volume ratio of the fine particles and the fact that they are forced to move through the volume of gas causes rapid evaporation of the solvent and drying of the organometallic coating. By the time the particles reach a collection surface following the atomization step, they usually have a coating which is quite dry and hard enough to avoid cracking or spalling. Process control variables include the concentration of particles in the coating solution, which should be maintained as high as possible (to avoid the formation of discrete coating material not adhering onto the particles) while maintaining a sufficiently low level of agglomeration. Other process control variables include the viscosity of the coating solution and it is found useful to increase this viscosity by the addition of a binder such as glycerol in those cases where coarse particles have to be coated. When employed, petroleum pitch may also serve this purpose.

Other coating methods known in the art of microencapsulation, particularly those used for pharmaceutical preparation, can also be employed. Such methods and related equipment are described for example the above-mentioned DRUG DEVELOPMENT AND INDUSTRIAL PHARMACY article and in "Pharmaceutical Dosage Form" edited by H.A. Lieberman and L. Lackman in the 3rd volume published by Marcel Dekker Inc. in 1982 (the disclosure of which is incorporated herein by reference). Among these other methods, fluidized bed techniques are preferred in that such methods are similar to spray drying since the coating solutions are atomized into a fluidized bed of the particles to be coated (see in particular the equipment shown on page 361 of the DRUG DEVELOPMENT AND INDUSTRIAL PHARMACY article mentioned above). There are many manufacturers of these coating units e.g. Glatt Air Techniques Inc., Lakso Company, Aeromatic Inc. and Vector/Freund Corporation.

For fluidized bed techniques, process control variables include feed material properties (e.g. the viscosity of the coating solution, the flow rate of the coating solution, the uniformity and size of the particles and the concentration of the organometallic), as well as the flow rate and temperature of the fluidizing gas stream. These variables can be optimized to produce even coatings of the desired thickness.

Whichever coating technique is employed, the concentration of the coating solution normally falls within the range of 50 to 500 g/l of the organometallic compound in the solvent, although lower or higher concentrations can be used, if required, to achieve particular desired results.

The particles which can adequately be coated and dried without aggregation by these atomization techniques normally range in size from 100 to 1000 Grit size (corresponding to particles of 5 to 140 microns). Finer particles (e.g. of 1200 Grit size corresponding to submicronic particles) may result in some aggregation of the particles, but the resulting aggregate can be easily ground, e.g. in a ball mill, without significant abrasion of the coating.

When using inflammable materials to form the coating solution, care should be taken during the drying step to avoid conditions that could result in ignition or explosion of the solvent vapour. This can be done (a) keeping the drying temperature below the ignition temperature of the vapour, (b) maintaining air/vapour ratios outside the inflammable range, or (c) using non-oxidizing gas (e.g. $N_2$ or Ar) for the drying step.

On the commercial scale, it is advantageous to collect the solvent vapour after the drying step, condense it and re-use it to form more of the coating solution.

Following the coating and drying step, the coated particles are normally collected and then subjected to one or more heating steps. If the final coating is to be a metal oxide, the final step of the process involves converting the organometallic compound to a metal oxide by raising the temperature of the organometallic to the conversion temperature normally in the range of 250-500°C, for a suitable time. This can be achieved by heating the particles in an oven, furnace or other heating device. However, if desired, the atomization and treating steps may be carried out simultaneously by atomizing the dispersion into a volume of gas heated to the desired oxide-forming temperature.

The heating is normally carried out in air, particularly if the organometallic compound must react with oxygen to form the metal oxide. However, other gaseous atmospheres may be used, if desired.

If the final coating is to be a nitride, the oxide formed in the manner indicated above must be reacted with carbon from the carbon precursor and nitrogen from a suitable source, e.g. according to the following reaction which relates to aluminium as the metal:

$$Al_2O_3 + 3C + N_2 \rightarrow 2AlN + 3CO$$

The source of nitrogen may be an atmosphere containing nitrogen itself or a nitrogen precursor, e.g. ammonia or an amine, which decomposes to nitrogen at the temperature of the reaction or at a lower temperature.

The temperature required for this nitridation reaction varies according to the metal oxide, but it is usually high, e.g. up to 1500°C or more.

If desired, the oxide-forming step and the nitride-forming step may be carried out separately or as parts of a single calcination step following the coating step.

The coatings produced by the process of the invention may have almost unlimited thicknesses but usually have a thickness of up to 2000 nm.

If desired, coatings or mixed oxides or nitrides, or oxides and nitrides doped with other materials, can be produced by the method of the invention merely by dissolving two or more organometallic compounds in the solvent or by dissolving a dopant or dopant precursor material along with the organometallic compound. For example, a mullite coating can be formed by preparing a solution containing organometallics of aluminium and silicon, and spinel coatings can be formed from organometallics of aluminum and magnesium.

The particles which may be coated by the process of the present invention are those made of materials that accept the coating without cracking the spalling, that can withstand the processing temperatures without melting, decomposing or denaturing, and that can be held substantially separate from each other by techniques such as those mentioned above when the solvent is evaporated. The materials are most preferably ceramics such as silicon carbide, silicon nitride, zirconia and alumina, but metals and even high melting point plastics may be coated in this way, if desired.

The particles may be of any desired shape, e.g. spherical, irregular, elongated whiskers or flat platelets.

The invention is illustrated in more detail by the following Examples.

### EXAMPLE 1

1100 g SiC from Norton (Norton® 500 grade) was slurried in 1 liter of n-heptane in which 88 g aluminum isopropoxide (corresponding to 2 w% $Al_2O_3$ based on the amount of SiC) had been previously dissolved. The resulting slurry was dispersed using an ultrasonic probe (Sonifier®, Model 350 from Branson) for 5 minutes. After dispersion, the slurry was spray-dried in air at a temperature of 120-130°C and then fired in air at 300°C for 2 hours.

Examination of the coated particles under Scanning Electron Photomicroscopy (SEM) showed that the resulting alumina coating was very smooth. X-ray maps of the surface indicated also that the alumina was always present on the surface, implying that the coating was continuous.

## EXAMPLE 2

In this Example, the same procedure as in Example 1 was used, except that the aluminum isopropoxide was replaced by aluminum sec-butoxide, the heptane replaced by toluene and the particulate to be coated replaced by fine silicon carbide powder "Exolon® F1000". The results obtained were the same as those obtained previously.

## EXAMPLE 3

In this Example, the same procedure as in Example 1 was again repeated except that the aluminum alkoxide was replaced by titanium isopropoxide, which was dissolved in toluene in a proportion to obtain 4 w% $TiO_2$ on SiC.

The results showed that the particles were uniformly coated with a smooth coating of titanium dioxide.

## EXAMPLE 4

In this Example, the same procedure was carried out as in Example 1 except that the aluminum alkoxide was replaced by zirconia isopropoxide. The procedure resulted in the deposition of uniform $ZrO_2$-coatings on the silicon carbide particles.

## EXAMPLE 5

In this Example, the aluminum alkoxide was replaced by yttrium isopropoxide. The same procedure was carried out as in Example 1 and resulted in the deposition of uniform $Y_2O_3$-coatings on the silicon carbide particles.

## EXAMPLE 6

In this Example, a mix of aluminum isobutoxide and tetraethoxysilane was dissolved in toluene in proportion to give 4 w% $3Al_2O_3.2SiO_2$ relative to Norton® 500 silicon carbide. The same procedure was used as in Example 1. Analysis by X-Ray Diffraction (XRD) showed that the coating consists of mullite $3Al_2O_3.2SiO_2$.

## EXAMPLE 7

In this Example the precursor solution for a spinel, i.e. $MgAl_2O_4$, was prepared by refluxing a mix of dehydrated isopropyl alcohol, aluminium isopropoxide, magnesium metallic turnings and a few grains of mercuric chloride. Silicon carbide (Norton® 500) was then dispersed in the resulting solution in a proportion to produce 5 wt% spinel on SiC. After dispersion, the slurry was spray-dried in argon at a temperature of 120-130°C and the resulting powders were then fired at 1100°C for 2 hours. Analysis by XRD and SEM of the composite powder indicated that the coating obtained consisted of a pure spinel phase.

## EXAMPLE 8

In this Example, a mixture of aluminum secondary-butoxide and sodium ethoxide was dissolved in toluene in a proportion to give 1 wt% $Na_2O$ in the alumina coating following calcination. The solution was used to coat a commercially available alumina (ALCAN C-75) by the procedure of Example 1. The resulting particles consisted of alumina with an $Na_2O$-doped alumina coating.

## EXAMPLE 9

In this Example, the same procedure as in Example 1 was used, except that the coating of the silicon carbide powder was carried out in a fluidized bed of the Wurster® type equipped with a solvent recovery system similar to that described in the paper by H.A. Lieberman and L. Lackman referred to above. Silicon carbide particles, from Norton Inc., of 100, 120, 500 and 1000 grit sizes were coated with aluminium secondary butoxide, the coating solution consisting of 30 wt% aluminium secondary butoxide. The particles were then calcined at 500°C. Results showed for all silicon carbide particle sizes tested, that uniform alumina coatings were deposited on the silicon carbide particles without any detectable agglomeration.

## EXAMPLE 10

In this Example, 4.6 grams of petroleum pitch "Aerocarb® 80", from Ashland Petroleum Company, were dissolved in 50 ml toluene under reflux conditions. The residue was filtered out and 50 ml aluminum sec-butoxide, from Alfa Research Chemicals, was then dissolved in the filtrate. Silicon carbide particles (150 grams of Norton® 500 particulate SiC) were then slurried in the resulting organic solution and the mix was spray-dried. The coated particles were calcined at 1500°C for 2 hours under a nitrogen atmosphere. Analysis by XRD indicated that a cubic AIN phase had been formed on the surfaces of the particles.

## Claims

1. A process for providing discrete solid particles with a coating of a metal compound, characterized in that:
said particles are coated with a substantially anhydrous solution containing an organometallic compound in a solvent that is substantially immiscible with water;
said solvent is evaporated from said solution while maintaining said coated particles substantially separate from each other;
said coated particles are heated to convert said organometallic compound to a metal oxide; and
said metal oxide is optionally converted to a corresponding metal nitride by heating said oxide in the presence of carbon and nitrogen.

2. A process according to claim 1 characterized in that said particles are maintained substantially separate from each other and said solvent is evaporated by a technique which involves atomizing the solution.

3. A process according to claim 2 characterized in that said technique comprises spray drying a dispersion of said particles in said solution.

4. A process according to Claim 2 characterized in that said technique comprises fluidizing a bed of said particles with a heated gas and spraying an atomized spray of the solution into the resulting fluidized bed.

5. A process according to claim 1 characterized in that said heating step is carried out subsequently to said evaporation step.

6. A process according to claim 5 characterized in that said heating step is carried out by collecting said particles coated with said organometallic compound following said evaporation step and heating said particles to a suitable oxide-forming temperature.

7. A process according to claim 6 characterized in that said heating temperature is within the range of 250-500°C.

8. A process according to claim 6 characterized in that the organometallic compound requires the presence of oxygen to be converted to said metal oxide and in that said heating step is carried out in an oxygen-containing atmosphere.

9. A process according to claim 6 characterized in that said organometallic is oxygen-containing and in that said heating is carried out in an oxygen-containing atmosphere or an atmosphere containing no oxygen.

10. A process according to claim 1 characterized in that said heating step is carried out simultaneously with said evaporation step.

11. A process according to claim 10 characterized in that said simultaneous evaporation and heating steps are carried out by heating said particles to a suitable oxide-forming temperature as said solvent is evaporated.

12. A process according to claim 11 characterized in that said heating temperature is in the range of 250-500°C.

13. A process according to claim 1 characterized in that said coating is to comprise a metal nitride and said metal oxide is converted to said nitride at a suitably high temperature.

14. A process according to claim 13 characterized in that said high temperature is about 1500°C or more.

15. A process according to claim 13 characterized in that said carbon is derived from a carbon precursor contained in said anhydrous solution.

16. A process according to claim 15 characterized in that said carbon precursor is petroleum pitch.

17. A process according to claim 13, 14, 15 or 16 characterized in that said nitrogen is derived from an atmosphere selected from nitrogen and nitrogen precursors.

18. A process according to claim 13, 14, 15, 16 or 17 characterized in that said organometallic compound is converted to said oxide and said oxide is converted to said nitride in a single heating step.

19. A process according to any preceding claim characterized in that said organometallic compound is selected from the group consisting of:
a) metal alkoxides of the general formula
$M(OR)_n$
wherein M is a metal atom,
n is a number equal to the variance of the metal, and
R is an alkyl group;
(b) $\beta$-diketonate complexes of metals;
(c) metal carboxylates of the formula $(RCOO)_nM$ wherein R, M and n are as defined above;
(d) metal alkyls; and
(e) metal aryls.

20. A process according to claim 19 characterized in that said organometallic compounds are those of group (a) in which R is n-propyl, isopropyl, n-butyl, isobutyl, t-butyl and n-amyl.

21. A process according to any preceding claim characterized in that said organometallic compounds are selected from the group consisting of aluminum isopropoxide, aluminum secondary butoxide, magnesium isopropoxide, zirconium isopropoxide and tetraethoxy silane.

22. A process according to any preceding claim for producing particles coated with mixed oxides, characterized in that said particles are coated with a solution of two or more different organometallic compounds in said solvent.

23. A process according to any preceding claim for producing particles coated with a doped metal oxide, characterized in that said particles are coated with a solution of said organometallic compound and a dopant or dopant precursor.

24. A process according to any preceding claim for providing said particles with a coating of a refractory oxide of a metal, characterized in that an organometallic compound is employed which is converted to a refractory oxide of a metal during said calcination step.

25. A process according to any preceding claim characterized in that said solvent is a polar liquid.

26. A process according to any preceding claim characterized in that said solvent is a hydrocarbon.

27. A process according to any preceding claim characterized in that said solvent is heptane or toluene.

28. A process according to any preceding claim characterized in that said particles are made of a ceramic material.

29. A process according to claim 28 characterized in that said ceramic material is silicon carbide, silicon nitride, zirconia or alumina.

30. A process according to any preceding claim characterized in that said particles are spherical particles, irregular particles, whiskers or platelets.